# EUROPEAN PATENT APPLICATION

(11) **EP 2 387 091 A1**
(43) Date of publication of application: **16.11.2011**
(21) Application number: 10162819.6
(22) Date of filing: 14.05.2010
(51) Int. Cl.: H01M 8/02

(54) **Fuel cell**

(71) Applicant: The European Union, represented by the European Commission, 1049 Brussels (BE)
(72) Inventor: Wilkening, Heinz, 31515, Wunstorf (DE)
(74) Representative: Office Freylinger

(57) **Abstract**

The present invention proposes a fuel cell, in particular a proton exchange membrane fuel cell, comprising a reactant gas inlet (12), a reactant gas outlet (14) and a plurality of reactant gas flow channels between the reactant gas inlet (12) and the reactant gas outlet (14). According to an important aspect of the invention, the reactant gas flow channels are arranged and configured so as to definea first distribution area (20) connected to the reactant gas inlet (12) for receiving reactant gas; a first reaction zone (16) with a parallel flow field comprising a plurality of straight flow channels (22), the straight flow channels (22) being connected to the first distribution area (20) for receiving reactant gas; a second distribution area (26) connected to the straight flow channels (22) for receiving reactant gas from the straight flow channels (22); a second reaction zone (18) with an interdigitated flow field comprising a plurality of interdigitated flow channels (28), the interdigitated flow channels (28) being connected to the second distribution area (26) for receiving reactant gas; and a third distribution area (32) connected to the interdigitated flow channels (28) for receiving reactant gas from the interdigitated flow channels (28) and for feeding the reactant gas to the reactant gas outlet (14).

## Description

The present invention relates to a fuel cell, in particular a proton exchange membrane fuel cell, for use in portable power sources, electric vehicle power sources, domestic cogeneration systems or the like.

Hydrogen is a very attractive fuel because it is clean and can be used to efficiently produce electricity in a fuel cell. The automotive industry expends significant resources in the development of hydrogen fuel cells as a source of power for vehicles. Such vehicles would be more efficient and generate fewer emissions than today's vehicles employing internal combustion engines.

A hydrogen fuel cell is an electrochemical device that includes an anode and a cathode with an electrolyte therebetween. The anode receives hydrogen gas and the cathode receives oxygen or air. The hydrogen gas is dissociated in the anode to generate free protons and electrons. The protons pass through the electrolyte to the cathode. The protons react with the oxygen and the electrons in the cathode to generate water. The electrons from the anode cannot pass through the electrolyte, and thus are directed through a load to perform work before being sent to the cathode. The work acts to operate the vehicle.

Proton exchange membrane (PEM) fuel cells are popular fuel cells for vehicles. The PEM fuel cell generally includes a solid polymer-electrolyte proton-conducting membrane, such as a perfluorosulfonic acid membrane. The anode and cathode typically include finely divided catalytic particles, usually platinum (Pt), supported on carbon particles and mixed with an ionomer. The catalytic mixture is deposited on opposing sides of the membrane. The combination of the anode catalytic mixture, the cathode catalytic mixture and the membrane define a membrane electrode assembly (MEA). MEAs are relatively expensive to manufacture and require certain conditions for effective operation.

Several fuel cells are typically combined in a fuel cell stack to generate the desired power. For the automotive fuel cell stack mentioned above, the stack may include about two hundred or more fuel cells. The fuel cell stack receives a cathode reactant gas, typically a flow of air forced through the stack by a compressor. Not all of the oxygen is consumed by the stack and some of the air is output as a cathode exhaust gas that may include water as a stack byproduct. The fuel cell stack also receives an anode hydrogen reactant gas that flows into the anode side of the stack.

The fuel cell stack includes a series of flow field plates positioned between the several MEAs in the stack. The flow field plates include an anode side and a cathode side for adjacent fuel cells in the stack. Anode gas flow channels are provided on the anode side of the flow field plates that allow the anode gas to flow to the anode side of the MEA. Cathode gas flow channels are provided on the cathode side of the bipolar plates that allow the cathode gas to flow to the cathode side of the MEA. The flow field plates also include flow channels through which a cooling fluid flows. Gas diffusion layers (GDL) are provided between the flow field plates and the catalyst layer to allow gas transport to the catalyst layer and water transport from the MEA.

As is well understood in the art, the membranes within a fuel cell need to have a certain relative humidity so that the ionic resistance across the membrane is low enough to effectively conduct protons. Water vapour and liquid water are generated by the electrochemical process and provide some or all of the necessary humidification. The cathode inlet air and anode inlet hydrogen may be humidified in some fuel designs for this purpose. However, during operation of the fuel cell, moisture from the MEAs and the external humidification may collect in the diffusion media layers, especially around lands of the plates between the flow channels and in the anode and cathode flow channels. Significant water accumulation in the diffusion media layers may prevent some of the reactant gas flow from reaching the catalyst layers, which may reduce cell performance.

In short, water management is crucial to the performance of the fuel cell: too much water will flood the fuel cell (flow channels, GDLs); too little water will dry the membrane. In both cases, the result is a drop in power output. A variety of solutions for managing water have been suggested, such as e.g. integrating pumps. A more cost effective solution is the altering the flow field design of the reactant gas flow channels.

Typically, there are two flow field designs that are generally used: The parallel flow field design essentially provides straight flow channels between the inlet and the outlet of the fuel cell. The interdigitated flow field design also provides straight flow channels wherein, however, every other flow channel is blocked at the inlet end and every other opposite flow channel is blocked at the outlet end, thereby forming interdigitated flow channels forcing the reactant gas through the diffusion media layer to get from the inlet to the outlet of the fuel cell. The flow of the reactant gas over the lands of the flow field plate in the gas diffusion layer (GDL) forces the water into the adjacent channels and out of the fuel cell. A fuel cell will benefit mostly by providing the interdigitated reactant gas flow on the cathode side of the fuel cells. However, it is known to also be beneficial to provide such interdigitated flow on the anode side of the fuel cells.

By blocking the reactant gas flow channels in this manner to provide the interdigitated flow, a pressure drop is created across the stack that makes the compressor have to work harder to force the reactant gas through the stack, thus consuming a significant amount of energy that affects system performance. Also, continuous interdigitated flow typically causes water accumulation at the outlet end of the inlet flow channels and the inlet end of the outlet flow channels that could block the flow channels.

US 2007/0178355 therefore suggests combining parallel flow and interdigitated flow by providing a fuel cell stack with an actuating device for selectively providing interdigitated reactant gas flow and straight reactant gas flow through reactant gas flow channels in order to reduce water accumulation in the diffusion media layers of the stack. Such an actuating device arranged within the fuel cell stack allows the wetness of the membrane to be controlled by regulating the frequency of use of the interdigitated flow. Such an actuating device however also requires for a number of mechanical parts to be integrated in the stack with the inherent drawbacks of high manufacturing costs, possible failures and difficult, if not impossible, maintenance or replacement of parts.

### Object of the invention

The object of the present invention is to provide an improved fuel cell wherein sufficient membrane wetting is guaranteed. This object is solved by the fuel cell as described in claim 1.

### General description of the invention

The present invention proposes a fuel cell, in particular a proton exchange membrane fuel cell, comprising a reactant gas inlet, a reactant gas outlet and a plurality of reactant gas flow channels between the reactant gas inlet and the reactant gas outlet. According to an important aspect of the invention, the reactant gas flow channels are arranged and configured so as to define:
- a first distribution area connected to the reactant gas inlet for receiving reactant gas;
- a first reaction zone with a parallel flow field comprising a plurality of straight flow channels, the straight flow channels being connected to the first distribution area for receiving reactant gas;
- a second distribution area connected to the straight flow channels for receiving reactant gas from the straight flow channels;
- a second reaction zone with an interdigitated flow field comprising a plurality of interdigitated flow channels, the interdigitated flow channels being connected to the second distribution area for receiving reactant gas;
- a third distribution area connected to the interdigitated flow channels for receiving reactant gas from the interdigitated flow channels and for feeding the reactant gas to the reactant gas outlet.

In the first reaction zone, the flow field design is that of a conventional parallel flow field. The concentration gradients are strong enough to warrant sufficient mass transport towards the electrodes - especially oxygen on the cathode side. Due to the shorter parallel flow field, humidity of the reactant gas at the inlet can be high. Indeed, water accumulation and pore blocking typically only occurs towards the end of a standard parallel flow field. This higher inlet humidity guarantees a high proton conductivity of the membrane.

In the second reaction zone, the flow field design is that of a conventional interdigitated flow field. In this zone, the mass transport is enhanced through convection, which ensures that sufficient oxygen is transported towards the cathode electrode. Proton conductivity of the membrane is also sufficient due to high inlet humidity and the water produced in the first reaction zone.

The second distribution area of the fuel cell collects the reactant gas from the first reaction zone and distributes it to the second reaction zone.

The present invention hence proposes a combined flow field - combining parallel flow field and interdigitated flow field - thereby providing sufficient mass transport for the parallel flow field and sufficient wetting for the interdigitated flow field.

Furthermore, the fuel cells are easy to manufacture and do not comprise any mechanical parts of a switching mechanism that is prone to failure. Manufacturing costs of the fuel cells can therefore be kept low, while nevertheless benefiting from both the parallel and interdigitated flow fields.

Advantageously, the second distribution channel comprises at least a first and a second portion, wherein the first and second portions are not in fluid communication with each other. The first portion receives reactant gas from a first portion of the first reaction zone and distributes it to a first portion of the second reaction zone. The second portion receives reactant gas from a second portion of the first reaction zone and distributes it to a second portion of the second reaction zone. The splitting of the second distribution channel into two or more portions may decrease the probability of blocking of channels, e.g. through water clogging.

The straight and interdigitated flow channels may have substantially the same length. It may however be advantageous to provide longer straight or interdigitated flow channels, depending on the operating conditions of the fuel cell. With low inlet humidity, longer straight flow channels are preferable, whereas with low stoichiometry, longer interdigitated flow channels are more beneficial.

The straight flow channels may have a width substantially corresponding to the width of ribs between neighbouring flow channels. It may however be advantageous to provide a first reaction zone wherein the straight flow channels are wider or narrower than the ribs therebetween. Wider flow channels would support diffusive mass transport of gases in the gas diffusion layer, while wider ribs would be more beneficial in reducing electric losses in the gas diffusion layer.

The interdigitated flow channels may have a width substantially corresponding to the width of ribs between neighbouring flow channels. It may however be advantageous to provide a second reaction zone wherein the interdigitated flow channels are wider or narrower than the ribs therebetween. Wider ribs would improve convective mass transport over diffusive mass transport in the gas diffusion layer and reduce electric losses. Wider ribs would however also increase the pressure drop, thereby reducing the efficiency of the fuel cell system due to the need of a larger blower.

### Detailed description with respect to the figures

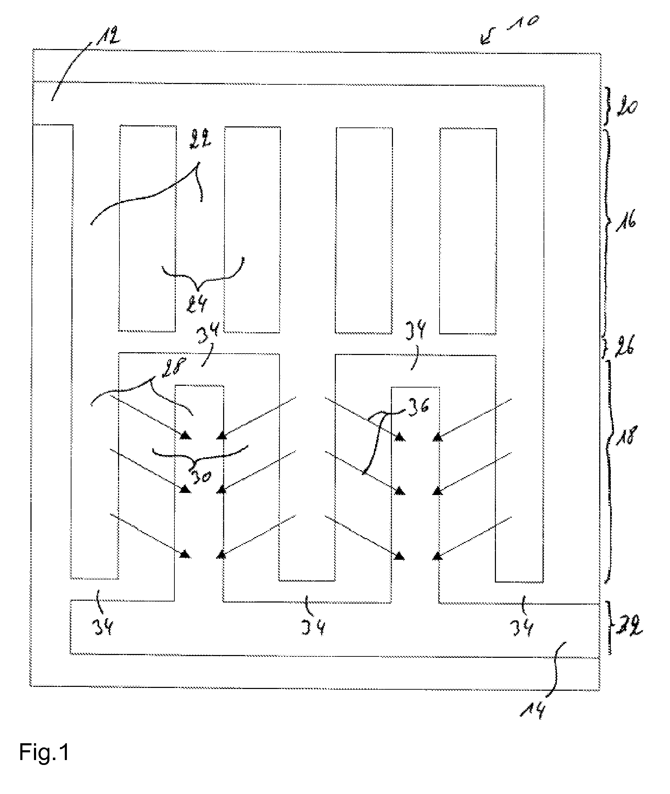

The present invention will be more apparent from the following description of a not limiting embodiment with reference to the attached drawing, wherein Fig.1 shows a schematic cut through the reactant gas flow channels of a fuel cell according to the invention.

Figure 1 shows a flow design for a fuel cell, in particular a proton exchange membrane fuel cell, according to the present invention.

The flow design 10 comprises a reactant gas inlet 12, a reactant gas outlet 14 and a plurality of reactant gas flow channels therebetween. The reactant gas flow channels are arranged so as to define two separate reaction zones, wherein, in a first reaction zone 16, flow channels are arranged in a straight configuration and, in a second reaction zone 18, flow channels are arranged in an interdigitated configuration.

A first distribution area 20 is arranged upstream of the first reaction zone 16 for receiving reactant gas from the reactant gas inlet 12 and delivering it to the first reaction zone 16. The first reaction zone 16 presents a parallel flow field comprising a plurality of straight flow channels 22 separated form one another by ribs 24. The reactant gas flows from the first distribution area 20, in parallel channels towards a second distribution area 26, which collects the reactant gas from the first reaction zone 16 for delivery to the second reaction zone 18.

As shown in Figure 1, the second distribution area 26 may extend over the whole width of the reaction zones 16, 18. It may however be advantageous to design the second distribution area 26 in separate portions that are not fluidly connected to one another. Indeed, a first portion of the second distribution area may connect a first portion of the first reaction zone to a first portion of the second reaction zone and a second portion of the second distribution area may connect a second portion of the first reaction zone to a second portion of the second reaction zone. This may help prevent clogging of the channels.

The second reaction zone 18 presents an interdigitated flow field comprising a plurality of interdigitated flow channels 28 separated form one another by ribs 30. The reactant gas flows from the second distribution area 26 towards a third distribution area 32, which collects the reactant gas from the second reaction zone 18.

In the interdigitated flow field, alternate inlet ends and outlet ends of the flow channels 28 are blocked by end ribs 34. The reactant gas is prevented from flowing directly from the second distribution area 26 to the third distribution area 32 by the end ribs 34. The reactant gas is forced to flow through the gas diffusion layer GDL (not shown) arranged between the flow channels 28 and the proton exchange membrane. Indeed, by flowing through the gas diffusion layer (GDL), the reactant gas is able to bridge the ribs 30 separating neighbouring interdigitated flow channels 28. Such bridging of the ribs 30 is schematically illustrated by arrows 36. Reactant gas is forced from interdigitated flow channels 28 opening into the second distribution area 26 into interdigitated flow channels 28 opening into the third distribution area 32. Such bridging causes an increased wetting of the proton exchange membrane in the second reaction zone 18.

The third distribution area 32 is connected to the reactant gas outlet 14 for evacuating the reactant gas form the flow design 10.

### List of Reference Signs

- 10: flow design
- 12: reactant gas inlet
- 14: reactant gas outlet
- 16: first reaction zone
- 18: second reaction zone
- 20: first distribution area
- 22: straight flow channels
- 24: ribs
- 26: second distribution area
- 28: interdigitated flow channels
- 30: ribs
- 32: third distribution area
- 34: end ribs
- 36: arrows

## Claims

1. A fuel cell, in particular a proton exchange membrane fuel cell, comprising a reactant gas inlet, a reactant gas outlet and a plurality of reactant gas flow channels between said reactant gas inlet and said reactant gas outlet,
**characterized in that** said reactant gas flow channels are arranged and configured so as to define:
a first distribution area connected to said reactant gas inlet for receiving reactant gas;
a first reaction zone with a parallel flow field comprising a plurality of straight flow channels, said straight flow channels being connected to said first distribution area for receiving reactant gas;
a second distribution area connected to said straight flow channels for receiving reactant gas from said straight flow channels;
a second reaction zone with an interdigitated flow field comprising a plurality of interdigitated flow channels, said interdigitated flow channels being connected to said second distribution area for receiving reactant gas;
a third distribution area connected to said interdigitated flow channels for receiving reactant gas from said interdigitated flow channels and for feeding said reactant gas to said reactant gas outlet.

2. The fuel cell according to claim 1, wherein the second distribution channel comprises at least a first and a second portion, the first and second portions not being in fluid communication with each other.

3. The fuel cell according to any of claims 1 to 2, wherein said straight flow channels are longer than said interdigitated flow channels.

4. The fuel cell according to any of claims 1 to 2, wherein said interdigitated flow channels are longer than said straight flow channels.

5. The fuel cell according to any of claims 1 to 4, wherein said straight flow channels are wider than ribs between neighbouring straight flow channels.

6. The fuel cell according to any of claims 1 to 4, wherein said straight flow channels are narrower than ribs between neighbouring straight flow channels.

7. The fuel cell according to any of claims 1 to 6, wherein said interdigitated flow channels are wider than ribs between neighbouring interdigitated flow channels.

8. The fuel cell according to any of claims 1 to 6, wherein said interdigitated flow channels are narrower than ribs between neighbouring interdigitated flow channels.
